# EUROPEAN PATENT SPECIFICATION

(11) **EP 2 843 979 B1**
(45) Date of publication and mention of the grant of the patent: **10.07.2019**
(21) Application number: 13782132.8
(22) Date of filing: 25.04.2013
(51) Int. Cl.: H04W 12/02, H04W 12/12, G06F 21/55, H04L 29/06, G06F 21/12

(54) **METHOD AND APPARATUS FOR PREVENTING SOUND RECORDING DURING THE CALL**
VERFAHREN UND VORRICHTUNG ZUR VERHINDERUNG EINER TONAUFZEICHNUNG WÄHREND EINES ANRUFS
PROCÉDÉ ET APPAREIL POUR EMPÊCHER L'ENREGISTREMENT DE SONS PENDANT UN APPEL

(30) Priority: 26.04.2012 CN 201210126892
(43) Date of publication of application: 04.03.2015
(73) Proprietor: Tencent Technology Shenzhen Company Limited, Shenzhen, Guangdong 518044 (CN)
(72) Inventor: LIANG, Jiahui, Shenzhen Guangdong 518044 (CN)
(74) Representative: Körber, Martin Hans
(86) International application number: PCT/CN2013/074744
(87) International publication number: WO 2013/159726

(56) References cited:
- CN-A- 102 045 712
- CN-A- 102 045 712
- CN-A- 102 186 166
- KR-A- 20070 105 129
- Sven Bugiel ET AL: "XManDroid: A New Android Evolution to Mitigate Privilege Escalation Attacks XManDroid: A New Android Evolution to Mitigate Privilege Escalation Attacks", , 30 June 2011 (2011-06-30), XP055180974, Retrieved from the Internet: URL:https://www.informatik.tu-darmstadt.de /fileadmin/user_upload/Group_TRUST/PubsPDF /xmandroid.pdf [retrieved on 2015-04-02]

## Description

### FIELD OF THE INVENTION

The present disclosure relates to a communication field, and more particularly, to a method and device for preventing recording during a conversation.

### BACKGROUND

In recent years, with rapid development of smartmobile phone technologies, smartphones may have been widely used and application software based on the smartphone may have been rapidly developed. At present, there may be a lot of application software based on the smartphone.

At present, hackers may develop malware based on the smartphone to conduct illegal activities. For instance, eavesdropping software may be the malware developed by the hackers based on the smartphone. The hackers may secretly install the eavesdropping software on the smartphone, when a user makes a phone with the smartphone, the eavesdropping software may secretly record the conversation of the user in the background of the smartphone. The recorded conversation may be used for illegal activities, which may pose a threat to information security of the user.

Sven Bugiel ET AL: XManDroid: "A New Android Evolution to Mitigate Privilege Escalation Attacks" discloses a solution for detecting and preventing the privilege escalation attacks.

### SUMMARY

In order to ensure the information security of the user, examples of the present disclosure may provide a method and device for prevent recording during a conversation. The technical scheme may be as follows.

A method for preventing recording during a conversation includes:
monitoring a mobile terminal device in real time;
obtaining a current state of the mobile terminal device and determining whether the current state of the mobile terminal device is a talk state if a monitoring result is that an application requests for calling a method for recording comprised in a class for recording;
determining that the application is an application illegally used for recording and preventing the application from recording if the current state of the mobile terminal device is the talk state.

The method for obtaining the current state of the mobile terminal device includes:
calling an interface for obtaining the talk state from an interface database comprised in an OS of the mobile terminal device; and
obtaining the current state of the mobile terminal device via the interface for obtaining the talk state.

The method for determining that the application is the application illegally used for recording and preventing the application from recording includes:
determining that the application is the application illegally used for recording; and
preventing the application from calling a method for recording from a class for recording of an OS of the mobile terminal device.

The method for determining that the application is the application illegally used for recording includes:
reminding a user; and
determining that the application is the application illegally used for recording if an instruction for ending the application is received from the user.

Before monitoring the mobile terminal device in real time, the method further includes:
setting a monitoring unit in a class for recording of an OS of the mobile terminal device.

A device for preventing recording during a conversation includes:
a monitoring module, configured to monitor a mobile terminal device in real time;
an obtaining module, configured to obtain a current state of the mobile terminal device and determine whether the current state of the mobile terminal device is a talk state if the monitoring module finds that an application requests for calling a method for recording comprised in a class for recording; and
a preventing module, configured to determine that the application is an application illegally used for recording and prevent the application from recording if the current state of the mobile terminal device obtained by the obtaining module is a talk state.

The obtaining module may be further configured to call an interface for obtaining the talk state from an interface database in an OS of the mobile terminal device and obtain the current state of the mobile terminal device via the interface for obtaining the talk state.

The preventing module includes:
a second determination unit, configured to determine that the application is the application illegally used for recording if the current state of the mobile terminal device is the talk state; and
a preventing unit, configured to prevent the application determined by the second determination unit from calling a method for recording from a class for recording of an OS of the mobile terminal device.

The second determination unit is further configured to remind a user if the current state of the mobile terminal device is the talk state and determine that the application is the application illegally used for recording if an instruction for ending the application is received from the user.

The device further includes a setting module, configured to set a monitoring unit in a class for recording of an OS of the mobile terminal device.

According to an example of the present disclosure, the mobile terminal device may be monitored in real time. If a monitoring result shows that an application for recording is installed on the mobile terminal device, the current state of the mobile terminal device may be obtained. If the current state of the mobile terminal device is the talk state, it may be determined that the application is an application illegally for recording and the application may be prevented from recording. Therefore, during a conversation of the user with the mobile terminal device, the conversation of the user may be protected from recording performed by the eavesdropping software and information security of the user may be ensured.

### BRIEF DESCRIPTION OF THE DRAWINGS

Figure 1 is a flow chart illustrating a method for preventing recording during a conversation in accordance with a first example of the present disclosure;
Figure 2 is a flow chart illustrating another method for preventing recording during a conversation in accordance with a second example of the present disclosure;
Figure 3 is a schematic diagram illustrating structure of a first device for preventing recording during a conversation in accordance with a third example of the present disclosure;
Figure 4 is a schematic diagram illustrating structure of a second device for preventing recording during a conversation in accordance with the third example of the present disclosure; and
Figure 5 is a schematic diagram illustrating structure of a third device for preventing recording during a conversation in accordance with the third example of the present disclosure.

### DETAILED DESCRIPTION

In order to make objectives, technical solutions and advantages of the present invention more apparent, the present invention will be described in detail hereinafter with reference to accompanying drawings.

### The first example

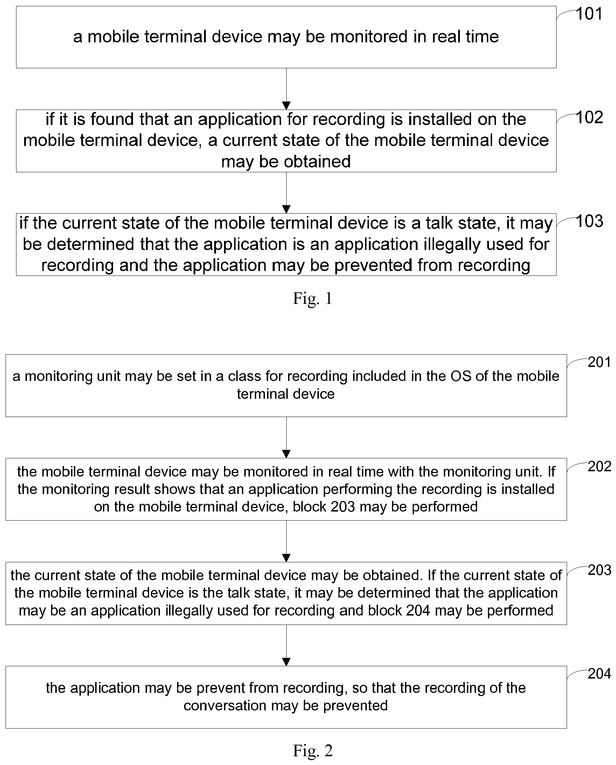

Referring to figure 1, an example of the present disclosure may provide a method for preventing recording during a conversation. The method may include following blocks.

In block 101, a mobile terminal device may be monitored in real time.

In block 102, if it is found that an application for recording is installed on the mobile terminal device, a current state of the mobile terminal device may be obtained.

In block 103, if the current state of the mobile terminal device is a talk state, it may be determined that the application is an application illegally used for recording and the application may be prevented from recording. The talk state may be a state that the mobile terminal device may be called by another mobile terminal device or the mobile terminal device may call another mobile terminal device.

The above block 101 may include:
(11) monitoring a method for recording included in a class for recording of the Operating System (OS) of the mobile terminal device in real time with a monitoring unit; and
(12) determining that an application for recording is installed on the mobile terminal device if the monitoring unit finds if an application requesting for calling the method for recording is installed on the mobile terminal device.

The above block 102 may include calling an interface for obtaining the talk state from an interface database in the OS of the mobile terminal device and obtaining the current state of the mobile terminal device via the interface for obtaining the talk state.

The above block 103 may include:
(21) determining that the application may be an application illegally for recording; and
(22) preventing the application from calling the method for recording from the class for recording of the OS of the mobile terminal device and returning a reset value to the application, so that the application cannot normally perform recording.

The above block (21) may further include:
reminding a user to determine that the application may be an application illegally for recording if an instruction for stopping the application is received from the user.

Furthermore, before block 101, the method may further include:
setting the monitoring unit in the class for recording of the OS of the mobile terminal device, so that the monitoring unit may monitor the method for recording included in the class for recording in real time.

According to an example of the present disclosure, the mobile terminal device may be monitored in real time. If a monitoring result shows that an application for recording is installed on the mobile terminal device, the current state of the mobile terminal device may be obtained. If the current state of the mobile terminal device is the talk state, it may be determined that the application is an application illegally for recording and the application may be prevented from recording. Therefore, during a conversation of the user with the mobile terminal device, the conversation of the user may be protected from recording performed by the eavesdropping software and information security of the user may be ensured.

### The second example

Referring to figure 2, the second example of the present disclosure provides a method for preventing recording during a conversation. The method may include following blocks.

In block 201, a monitoring unit may be set in a class for recording included in the OS of the mobile terminal device.

The OS of the mobile terminal device may include the class for recording, the class for recording may include a method for recording and the method for recording may include a method for initializing the recording, a method for starting the recording and /or a method for ending the recording, etc.

When the application running on the mobile terminal device starts the recording, the application may first request for calling the method for recording from the class for recording included in the OS of the mobile terminal device and then perform the recording with the called method for recording.

According to an example of the present disclosure, the monitoring unit may be set in the class for recording included in the OS of the mobile terminal device and whether an application for recording is installed on the mobile terminal device may be monitored with the monitoring unit.

Common (OS) s of the mobile terminal device may include an Android system and a Symbian system, etc. This example may be described taking the Android system for example, which may not limit the protection scope of the present disclosure.

The class for recording in the Android system may be a MediaPlayer. The MediaPlayer may include methods for recording, such as functions of Prepare (), Start () and Stop (). The Prepare () may be used for initializing the recording, the Start () may be used for starting the recording and the Stop () may be used for ending the recording. As for the application running on the mobile terminal device, if an application for recording is installed on the mobile terminal device, the application may first request for calling the Prepare () for initializing the recording from the MediaPlayer included in the Android system of the mobile terminal device. After the initiation is completed, the application may request for calling the Start () from the MediaPlayer class in the Android system of the mobile terminal device to start the recording. At last, when the recording ends, the application may request for calling the Stop () from the MediaPlayer class included in the Android system of the mobile terminal device to end the recording.

The mobile terminal device may be a smartphone.

In block 202, the mobile terminal device may be monitored in real time with the monitoring unit. If the monitoring result shows that an application performing the recording is installed on the mobile terminal device, block 203 may be performed.

The method for recording included in the class for recording of the OS of the mobile terminal device may be monitored by the monitoring unit in real time. If the monitoring unit finds that there is an application requesting for calling the method for recording included in the class for recording, the monitoring unit may determine that an application performing the recording is installed on the mobile terminal device.

If an application for recording is installed on the mobile terminal device, the application may first request for calling a method for recording from the class for recording of the OS of the mobile terminal device. Therefore, in this block, if the monitoring unit finds that there is an application requesting for calling the method for recording form the class for recording, the monitoring unit may determine that an application for recording may be installed on the mobile terminal device.

First, the monitoring unit may be set in the MediaPlayer class included in the Android system of the mobile terminal device, the Prepare (), Start () and Stop () included in the MediaPlayer class may be monitored in real time by the monitoring unit.

As for an application running on the Android system of the mobile terminal device, if the application needs to perform recording, the application may request for calling the Prepare (), Start () and Stop () from the MediaPlayer class of the Android system.

According to an example, the Prepare (), Start () and Stop () included in the MediaPlayer class of the Android system may be monitored with the monitoring unit. If the monitoring unit finds that the Prepare (), Start () and / or Stop () included in the MediaPlayer class is called by the application, it may be determined that an application performing the recording is installed on the mobile terminal device.

In block 203, the current state of the mobile terminal device may be obtained. If the current state of the mobile terminal device is the talk state, it may be determined that the application may be an application illegally used for recording and block 204 may be performed.

An interface for obtaining the talk state may be called from an interface database of the OS of the mobile terminal device, the current state of the mobile terminal device may be obtained with the interface for obtaining the talk state and the current state of the mobile terminal device may be determined. If the current state of the mobile terminal device is the talk state, it may be determined that the application may be the application illegally for recording and block 204 may be performed.

An application legally used for recording in the mobile terminal device may be an application for recording set in the mobile terminal device by a manufacturer of the mobile terminal device and / or an application for recording downloaded by the user. The application illegally used for recording in the mobile terminal device may be an application for recording installed on the mobile terminal device by hackers or a hacker network without acknowledging the user.

The application legally used for recording may perform the recording after the application is started by the user. Generally, the user may not start the application for recording during the conversation or close the application for recording. The application illegally used for recording may automatically start up during the conversation of the user and secretly record the conversation of the user. For instance, the application illegally used for recording may be the eavesdropping software. The eavesdropping software may record the conversation of the user when the user talks on the mobile terminal device, which may pose a threat on the information security of the user.

For instance, as for the Android system, the interface for obtaining the talk state included in the interface database of the Android system may be TelephoneyManager.getCallstate (). According to an example, the TelephoneyManager.getCallstate () may be called from the interface database of the Android system of the mobile terminal device and the current state of the mobile terminal device may be determined with the called TelephoneyManager.getCallstate (). If the current state of the mobile terminal device is the talk state, it may be determined that the application may be the application illegally used for recording.

In this block, it may be determined that the application may be application illegally used for recording after determining the current state of the mobile terminal device may be the talk state. Whether the application is the application illegally used for recording also may be determined by reminding the user, receiving an instruction from the user and determining that the application may be application illegally used for recording after determining that the instruction may be the instruction for closing the application.

For instance, an identifier of the application may be displayed on the interface of the mobile terminal device to remind the user, prompt content may be displayed on the interface of the mobile terminal device to remind the user, or prompt content may be played for the user in voice to remind the user. For instance, the prompt content may be "the conversation is recorded". The interface may be a User Interface (UI) function interface of the mobile terminal device or a prompt interface set in the mobile terminal device in advance. The identifier may be a name of the application.

After the user is reminded, the user may determine whether the application is the application illegally used for recording. If the application is the application illegally used for recording, an instruction for closing the application may be submitted; otherwise, an instruction for continuing to running the application may be submitted.

In this block, if the current state of the mobile terminal device is a non-talk state, it may be determined that the application may be that legally for recording. The method for recording that needs to be called by the application may be called from the class for recording of the OS of the mobile terminal device. The called method for recording may be run to obtain a running result and the running result may be sent to the application. Then, the application may perform the recording according to the running result.

In block 204, the application may be prevent from recording, so that the recording of the conversation may be prevented.

The application may be prevent from calling the method for recording from the class for recording of the OS of the mobile terminal device, a preset value may be sent to the application, so that the application cannot perform the recording and the application may be prevent from recording during the conversation of the user.

If the application needs to perform the recording, the application should call the method for recording which needs to be called by the application, and run the method for recording. The running result is obtained after the method for recording is run and a normal recording operation may be performed according to the running result. According to an example of the present disclosure, the application may be prevented from calling the method for recording which needs to be called by the application and the preset value may be returned to the application. The preset value may not be the running result obtained by running the method for recording. Therefore, the application can not perform the normal recording according to the preset value.

According to an example of the present disclosure, the monitoring unit may be set in the class for recording included in the OS of the mobile terminal device. The mobile terminal device may be monitored with the monitoring unit in real time. If the monitoring unit finds that an application performing the recording is installed in the mobile terminal device, the current state of the mobile terminal device may be obtained. If the current state of the mobile terminal device is the talk state, it may be determined that the application may be application illegally used for recording and the recording operation of the application should be prohibited. Therefore, it may be avoided that the conversation of the user may be recorded by malware such as the eavesdropping software and the information security of the user may be effectively ensured.

### The third example

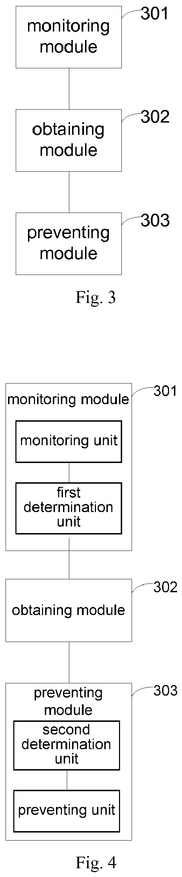

Referring to figure 3, an example of the present disclosure provides a device for preventing recording during a conversation. The device may include:
a monitoring module 301, configurd to monitor a mobile terminal device in real time;
an obtaining module 302, configurd to obtain a current state of the mobile terminal device if the monitoring unit 301 finds that an application for recording is installed on the mobile terminal device; and
a preventing module 303, configurd to determine that the application may be an application illegally used for recording and prevent the application from recording if the current state obtained by the obtaining module 302 is a talk state.

Referring to figure 4, the monitoring module 301 may include:
a monitoring unit, configurd to monitor a method for recording included in a class for recording of an OS of the mobile terminal device in real time; and
a first determination unit, configurd to determine that an application for recording is installed on the mobile terminal device if the monitoring unit finds that the application requesting for calling the method for recording is installed on the mobile terminal device.

The OS of the mobile terminal device may include the class for recording, the class for recording may include the method for recording and the method for recording may include a method for initializing the recording, a method for starting the recording and /or a method for ending the recording, etc.

When the application running on the mobile terminal device starts the recording, the application may first request for calling the method for recording from the class for recording included in the OS of the mobile terminal device and then perform a recording behavior with the called method for recording.

According to an example of the present disclosure, the monitoring unit may monitor the method for recording included in the class for recording to monitor whether there is an application performing the recording.

The obtaining module 302 may be to call an interface for obtaining the talk state from an interface database included in the OS of the mobile terminal device and obtain the current state of the mobile terminal device via the interface for obtaining the talk state.

Referring to figure 4, the preventing module 303 may include:
a second determination unit, configurd to determine that the application may be the application illegally for recording if the current state of the mobile terminal device is the talk state; and
a preventing unit, configurd to prevent the application determined by the second determination unit from calling the method for recording from the class for recording of the OS of the mobile terminal device and return a preset value to the application, so that the application can not normally perform the recording.

The second determination unit may be further to remind the user if the current state of the mobile terminal device is the talk state and determine that the application is that illegally for recording if an instruction for ending the application is received from the user.

An application legally used for recording in the mobile terminal device may be an application for recording set in the mobile terminal device by a manufacturer of the mobile terminal device and / or an application for recording downloaded by the user. The application illegally used for recording in the mobile terminal device may be an application for recording installed on the mobile terminal device by hackers or a hacker network without acknowledging the user.

The application legally used for recording may perform the recording after the application is started by the user. Generally, the user may not start the application for recording during the conversation or close the application for recording. The application illegally used for recording may automatically start up during the conversation of the user and secretly record the conversation of the user. For instance, the application illegally used for recording may be the eavesdropping software. The eavesdropping software may record the conversation of the user when the user talks on the mobile terminal device, which may pose a threat on the information security of the user.

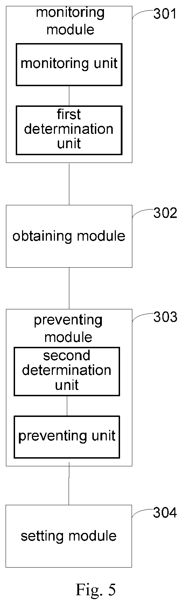

Referring to figure 5, the device may further include:
a setting module 304, configurd to set a monitoring unit in a class for recording of an OS of the mobile terminal device, so that the monitoring unit monitors a method for recording comprised in the class for recording in real time.

According to an example of the present disclosure, the mobile terminal device may be monitored in real time. If a monitoring result shows that an application for recording is installed on the mobile terminal device, the current state of the mobile terminal device may be obtained. If the current state of the mobile terminal device is the talk state, it may be determined that the application is an application illegally for recording and the application may be prevented from recording. Therefore, during a conversation of the user with the mobile terminal device, the conversation of the user may be protected from recording performed by the eavesdropping software and information security of the user may be ensured.

It should be noted that the device for preventing recording during a conversation provided by the above examples may be described according to the above function modules. In practice, the above functions may be implemented by different function modules. That is, the structure of the device may be divided into different function modules to implement all or partial of the above functions. Furthermore, the device for preventing recording provided by the above examples and the method for preventing recording provided by the above examples may belong to the same idea. The implementation process of the device for preventing recording may be shown in the method examples, which may not be repeated here.

It may be well known by an ordinary skilled in the art of the present disclosure that all or partial of the above examples may be implemented with hardware or implemented by a program instructing relevant hardware. The program may be stored in a computer readable storage medium. The computer readable storage medium may be a read only storage, a disk or a Compact Disc (CD), etc.

What has been described and illustrated herein are examples of the disclosure along with some variations and are not meant as limitations. Many variations are possible within the scope of the disclosure, which is intended to be defined by the following claims -- and their equivalents -- in which all terms are meant in their broadest reasonable sense unless otherwise indicated.

## Claims

1. A method for preventing recording during a conversation, characteristized by comprising:
monitoring a mobile terminal device in real time (101);
obtaining a current state of the mobile terminal device and determining whether the current state of the mobile terminal device is a talk state if a monitoring result is that an application requests for calling a method for recording comprised in a class for recording of an Operating System of the mobile terminal device;
determining that the application is an application illegally used for recording and preventing the application from recording if the current state of the mobile terminal device is the talk state (103)(203).

2. The method according to claim 1, wherein obtaining the current state of the mobile terminal device comprises:
calling an interface for obtaining the talk state from an interface database comprised in an OS of the mobile terminal device; and
obtaining the current state of the mobile terminal device via the interface for obtaining the talk state.

3. The method according to claim 1, wherein determining that the application is the application illegally used for recording and preventing the application from recording comprises:
determining that the application is the application illegally used for recording; and
preventing the application from calling a method for recording from a class for recording of an OS of the mobile terminal device.

4. The method according to claim 3, wherein determining that the application is the application illegally used for recording comprises:
reminding a user; and
determining that the application is the application illegally used for recording if an instruction for ending the application is received from the user.

5. The method according to any of claims 1 to 4, wherein before monitoring the mobile terminal device in real time, the method further comprises:
setting a monitoring unit in a class for recording of an OS of the mobile terminal device.

6. A device for preventing recording during a conversation, characteristized by comprising:
a monitoring module (301), configurd to monitor a mobile terminal device in real time;
an obtaining module (302), configurd to obtain a current state of the mobile terminal device and determine whether the current state of the mobile terminal device is a talk state if the monitoring module (301) finds that an application requests for calling a method for recording comprised in a class for recording of an Operating System of the mobile terminal device;
a preventing module (303), configurd to determine that the application is an application illegally used for recording and prevent the application from recording if the current state of the mobile terminal device obtained by the obtaining module (302) is the talk state.

7. The device according to claim 6, wherein
the obtaining module (302) is further configured to call an interface for obtaining the talk state from an interface database comprised in an OS of the mobile terminal device and obtain the current state of the mobile terminal device via the interface for obtaining the talk state.

8. The device according to claim 6, wherein the preventing module (303) comprises:
a second determination unit, configurd to determine that the application is the application illegally used for recording if the current state of the mobile terminal device is the talk state; and
a preventing unit, configurd to prevent the application determined by the second determination unit from calling a method for recording from a class for recording of an OS of the mobile terminal device.

9. The device according to claim 8, wherein
the second determination unit is further configured to remind a user if the current state of the mobile terminal device is the talk state and determine that the application is the application illegally used for recording if an instruction for ending the application is received from the user.

10. The device according to any of claims 6 to 9, further comprising:
a setting module (304), configurd to set a monitoring unit in a class for recording of an OS of the mobile terminal device.

11. A non-transitory computer-readable medium storing a program, to perform the method in any of claims 1 to 5.

## Patentansprüche

1. Verfahren zum Verhindern der Aufzeichnung während eines Gesprächs, aufweisend die folgenden Schritte:
Überwachen eines mobilen Endgerätes in Echtzeit (101);
Ermitteln eines aktuellen Zustands des mobilen Endgerätes und
Feststellen, ob der aktuelle Zustand des mobilen Endgerätes einen Gesprächszustand darstellt, wenn ein Überwachungsergebnis dadurch gegeben ist, dass eine Anwendung zum Aufrufen eines in einer Aufzeichnungs-Klasse eines Betriebssystems des mobilen Endgerätes enthaltenen Aufzeichnungsverfahrens auffordert;
Feststellen, ob die Anwendung eine Anwendung ist, die illegal zum Aufzeichnen verwendet wird; und
Verhindern dass die Anwendung aufzeichnet, wenn der aktuelle Zustand des mobilen Endgerätes ein Gesprächszustand (103)(203) ist.

2. Verfahren nach Anspruch 1,
wobei das Ermitteln des aktuellen Zustands des mobilen Endgerätes folgende Schritte umfasst:
Aufrufen einer Schnittstelle zum Ermitteln des Gesprächszustands von einer Schnittstellendatenbank, die in einem Betriebssystem des mobilen Endgerätes enthalten ist; und
Ermitteln des aktuellen Zustands des mobilen Endgerätes über die Schnittstelle, um den Gesprächszustand zu ermitteln.

3. Verfahren nach Anspruch 1,
wobei das Feststellen, ob die Anwendung jene Anwendung ist, die illegal zum Aufzeichnen und Verhindern der Aufzeichnung der Anwendung verwendet wird, weiterhin die folgenden Schritte umfaßt:
Feststellen, ob die Anwendung jene Anwendung ist, die illegal zum Aufzeichnen verwendet wird; und
Verhindern, dass die Anwendung zum Aufrufen eines aus einer Aufzeichnungs-Klasse eines Betriebssystems des mobilen Endgerätes enthaltenen Aufzeichnungsverfahren auffordert.

4. Verfahren nach Anspruch 3,
wobei das Feststellen, ob die Anwendung jene Anwendung ist, die illegal zur Aufzeichnung verwendet wird, weiterhin folgende Schritte umfaßt:
Ausgeben eines Warnhinweises an den Benutzer; und
Feststellen, ob die Anwendung jene Anwendung ist, die illegal zur Aufzeichnung verwendet wird, wenn eine Anweisung zum Beenden der Anwendung vom Benutzer empfangen wird.

5. Verfahren nach einem der Ansprüche 1 bis 4,
ferner aufweisend das Einrichten einer Überwachungseinheit aus einer Aufzeichnungs-Klasse eines Betriebssystems des mobilen Endgerätes
vor dem Überwachen des mobilen Endgerätes in Echtzeit.

6. Vorrichtung zum Verhindern der Aufzeichnung eines Gesprächs,
**gekennzeichnet durch**
ein Überwachungsmodul (301), das konfiguriert ist, um ein mobiles Endgerät in Echtzeit zu überwachen;
ein Ermittlungsmodul (302), das konfiguriert ist, um einen aktuellen Zustand des mobilen Endgerätes zu ermitteln und um festzustellen, ob der aktuelle Zustand des mobilen Endgerätes ein Gesprächszustand ist, wenn das Überwachungsmodul (301) feststellt, dass eine Anwendung zum Aufrufen eines in einer Aufzeichnungs-Klasse eines Betriebssystems des mobilen Endgerätes enthaltenen Aufzeichnungsverfahrens auffordert;
ein Präventionsmodul (303), das konfiguriert ist, um festzustellen, ob die Anwendung eine Anwendung ist, die illegal zum Aufzeichnen verwendet wird, und um die Aufzeichnung durch die Anwendung zu verhindern, wenn der aktuelle Zustand des mobilen Endgerätes, der durch das Ermittlungsmodul (302) ermittelt wird, der Gesprächszustand ist.

7. Vorrichtung nach Anspruch 6,
wobei das Ermittlungsmodul (302) ferner konfiguriert ist, um eine Schnittstelle zum Ermitteln des Gesprächszustands aus einer in einem Betriebssystem des mobilen Endgerätes enthaltenen Schnittstellendatenbank aufzurufen und den aktuellen Zustand des mobilen Endgerätes über die Schnittstelle zum Ermitteln des Gesprächszustands zu ermitteln.

8. Vorrichtung nach Anspruch 6,
wobei das Präventionsmodul (303) ferner aufweist:
eine zweite Ermittelungseinheit, die konfiguriert ist, um zu ermitteln, ob die Anwendung jene Anwendung ist, die illegal zum Aufzeichnen verwendet wird, wenn der aktuelle Zustand des mobilen Endgerätes der Gesprächszustand ist; sowie
eine Präventionseinheit, die konfiguriert ist, um zu verhindern, dass die durch die zweite Ermittelungseinheit ermittelte Anwendung zum Aufrufen eines zu einer Aufzeichnungs-Klasse eines Betriebssystems des mobilen Endgerätes gehörendes Aufzeichnungsverfahren auffordert.

9. Vorrichtung nach Anspruch 8,
wobei die zweite Feststellungseinheit ferner konfiguriert ist, um einen Benutzer einen Hinweis zu geben, wenn der aktuelle Zustand des mobilen Endgerätes der Gesprächszustand ist, und um festzustellen, wenn eine Anweisung zum Beenden der Anwendung vom Benutzer empfangen wird, ob die Anwendung jene Anwendung ist, die illegal zur Aufzeichnung verwendet wird.

10. Vorrichtung nach einem der Ansprüche 6 bis 9,
ferner aufweisend:
ein Einrichtungsmodul (304), das konfiguriert ist, um eine Überwachungseinheit in einer Aufzeichnungs-Klasse eines Betriebssystems des mobilen Endgerätes einzurichten.

11. Nichtflüchtiges, computerlesbares Medium,
in dem ein Programm gespeichert ist, welches das Verfahren nach einem der Ansprüche 1 bis 5 implementiert.

## Revendications

1. Procédé d'empêchement d'un enregistrement au cours d'une conversation, **caractérisé en ce qu'**il comprend :
la surveillance d'un dispositif terminal mobile en temps réel (101) ;
l'obtention d'un état actuel du dispositif terminal mobile et la détermination si l'état actuel du dispositif terminal mobile est un état de conversation si un résultat de la surveillance est qu'une application sollicite l'appel d'un procédé d'enregistrement compris dans une classe d'enregistrement d'un système d'exploitation du dispositif terminal mobile ;
la détermination que l'application est une application utilisée illégalement pour enregistrer, et l'empêchement fait à l'application d'enregistrer si l'état actuel du dispositif terminal mobile est l'état de conversation (103) (203).

2. Procédé selon la revendication 1, dans lequel l'obtention de l'état actuel du dispositif terminal mobile comprend :
l'appel d'une interface d'obtention de l'état de conversation à partir d'une base de données d'interfaces comprise dans un système d'exploitation du dispositif terminal mobile ; et
l'obtention de l'état actuel du dispositif terminal mobile par le biais de l'interface d'obtention de l'état de conversation.

3. Procédé selon la revendication 1, dans lequel la détermination que l'application est l'application utilisée illégalement pour enregistrer, et l'empêchement fait à l'application d'enregistrer comprennent :
la détermination que l'application est l'application utilisée illégalement pour enregistrer ; et
l'empêchement fait à l'application d'appeler un procédé d'enregistrement à partir d'une classe d'enregistrement d'un système d'exploitation du dispositif terminal mobile.

4. Procédé selon la revendication 3, dans lequel la détermination que l'application est l'application utilisée illégalement pour enregistrer comprend :
le rappel fait à un utilisateur ; et
la détermination que l'application est l'application utilisée illégalement pour enregistrer si une instruction de fermeture de l'application est reçue depuis l'utilisateur.

5. Procédé selon l'une quelconque des revendications 1 à 4, lequel procédé comprend en outre, préalablement à la surveillance du dispositif terminal mobile en temps réel :
le positionnement d'une unité de surveillance dans une classe d'enregistrement d'un système d'exploitation du dispositif terminal mobile.

6. Dispositif pour empêcher un enregistrement au cours d'une conversation, **caractérisé en ce qu'**il comprend :
un module de surveillance (301), configuré pour surveiller un dispositif terminal mobile en temps réel ;
un module d'obtention (302), configuré pour obtenir un état actuel du dispositif terminal mobile et déterminer si l'état actuel du dispositif terminal mobile est un état de conversation si le module de surveillance (301) établit qu'une application sollicite l'appel d'un procédé d'enregistrement compris dans une classe d'enregistrement d'un système d'exploitation du dispositif terminal mobile ;
un module d'empêchement (303), configuré pour déterminer que l'application est une application utilisée illégalement pour enregistrer, et empêcher l'application d'enregistrer si l'état actuel du dispositif terminal mobile obtenu par le module d'obtention (302) est l'état de conversation.

7. Dispositif selon la revendication 6, dans lequel
le module d'obtention (302) est configuré en outre pour appeler une interface d'obtention de l'état de conversation à partir d'une base de données d'interfaces comprise dans un système d'exploitation du dispositif terminal mobile et obtenir l'état actuel du dispositif terminal mobile par le biais de l'interface d'obtention de l'état de conversation.

8. Procédé selon la revendication 6, dans lequel le module d'empêchement (303) comprend :
une deuxième unité de détermination, configurée pour déterminer que l'application est l'application utilisée illégalement pour enregistrer si l'état actuel du dispositif terminal mobile est l'état de conversation ; et
une unité d'empêchement, configurée pour empêcher l'application, déterminée par la deuxième unité de détermination, d'appeler un procédé d'enregistrement à partir d'une classe d'enregistrement d'un système d'exploitation du dispositif terminal mobile.

9. Dispositif selon la revendication 8, dans lequel
la deuxième unité de détermination est configurée en outre pour rappeler à un utilisateur si l'état actuel du dispositif terminal mobile est l'état de conversation et déterminer que l'application est l'application utilisée illégalement pour enregistrer si une instruction de fermeture de l'application est reçue depuis l'utilisateur.

10. Dispositif selon l'une quelconque des revendications 6 à 9, comprenant en outre :
une unité de positionnement (304), configurée pour positionner une unité de surveillance dans une classe d'enregistrement d'un système d'exploitation du dispositif terminal mobile.

11. Support non transitoire lisible par ordinateur sur lequel est enregistré un programme permettant de mettre en oeuvre le procédé selon l'une quelconque des revendications 1 à 5.
